# EUROPÄISCHE PATENTSCHRIFT

(11) **EP 3 551 486 B1**
(45) Veröffentlichungstag und Bekanntmachung des Hinweises auf die Patenterteilung: **14.09.2022**
(21) Anmeldenummer: 17780689.0
(22) Anmeldetag: 29.09.2017
(51) Int. Cl.: B60H 1/00

(54) **BELÜFTUNGSEINRICHTUNG ZUR BELÜFTUNG EINES INNENRAUMS EINES KRAFTFAHRZEUGS**
VENTILATING DEVICE FOR VENTILATING AN INTERIOR OF A MOTOR VEHICLE
DISPOSITIF DE VENTILATION DE L'HABITACLE D'UN VÉHICULE AUTOMOBILE

(30) Priorität: 30.09.2016 DE 102016118583
(43) Veröffentlichungstag der Anmeldung: 16.10.2019
(73) Patentinhaber: Umfotec GmbH, 37154 Northeim (DE); Bayerische Motoren Werke Aktiengesellschaft, 80809 München (DE)
(72) Erfinder: BUCK, Ralf, 85110 Kipfenberg (DE); BIERMANN, Jan, 81669 München (DE)
(74) Vertreter: Hofstetter, Schurack & Partner
(86) Internationale Anmeldenummer: PCT/EP2017/074781
(87) Internationale Veröffentlichungsnummer: WO 2018/060428

(56) Entgegenhaltungen:
- DE-A1- 10 149 950
- DE-T2- 69 902 425
- JP-A- 2006 337 886

## Beschreibung

Die Erfindung betrifft eine Belüftungseinrichtung zur Belüftung eines Innenraums eines Kraftfahrzeugs, gemäß dem Oberbegriff von Patentanspruch 1.

Eine derartige Belüftungseinrichtung ist bereits aus dem Fahrzeugbau bekannt, wobei dort als akustische Dämpfungsmaßnahme typischerweise poröse Materialien eingesetzt werden. Basierend auf dem Prinzip eines Absorptionsschalldämpfers kann damit - beispielsweise durch Turbulenzen entstehende - Schallenergie teilweise absorbiert, das heißt in Wärme umgewandelt und somit ein Schalldruck beziehungsweise ein Schalldruckpegel reduziert werden. Aufgrund der Eigenschaften der verwendeten und zur Verfügung stehenden Materialien sowie des in der Regel begrenzten Bauraumes wird jedoch nur ein begrenzter Dämpfungseffekt in einem begrenzten Frequenzbereich erzielt. Zudem ist dieser gedämpfte Frequenzbereich nur bedingt gezielt anpass- oder steuerbar.

Des Weiteren ist aus der DE 101 49 950 A1 Luftverteiler- oder-diffusionspaneel für ein Kraftfahrzeug mit zumindest einem Lufteintritt und zumindest einem mit dem Lufteintritt in Verbindung stehenden Luftkanal bekannt. Hierbei ist zumindest ein Resonanzhohlraum vorgesehen, der derart angeordnet ist, dass zumindest teilweise luftströmungstechnische Geräusche in dem Kanal reduziert werden.

Überdies offenbart die JP 2006 337 886 A ein schallabsorbierendes Material mit einer helmholtzartigen Struktur.

Darüber hinaus ist aus der DE 699 02 425 T2 ein Kraftfahrzeugheiz- und/oder Klimagehäuse bekannt, welches durch Wandungen begrenzte Zirkulationskanäle aufweist. Zumindest eine der Wandungen umfasst Strömungsgeräusch-Absorptionsmittel, welche in Form von Helmholtzresonatoren ausgebildet sein können.

Es ist Aufgabe der Erfindung eine Belüftungseinrichtung mit verbesserten akustischen Eigenschaften zu schaffen.

Diese Aufgabe wird erfindungsgemäß durch eine Belüftungseinrichtung mit den Merkmalen des Patentanspruchs 1 gelöst. Vorteilhafte Ausführungen der Erfindung sind Gegenstand der abhängigen Patentansprüche und der Beschreibung.

Eine erfindungsgemäße Belüftungseinrichtung zeichnet sich dadurch aus, dass das akustische Dämpfungselement als Helmholtzresonator ausgebildet ist. Mit anderen Worten wird hier also das Funktionsprinzip eines Resonanzabsorbers zur Schallabsorption eingesetzt. Der Helmholtzresonator umfasst dazu einen Hohlraum oder eine Kammer, welche ein Luftvolumen zumindest größtenteils einschließt beziehungsweise umgibt und wenigstens eine Öffnung aufweist. Die Öffnung hat dabei eine geringere Ausdehnung beziehungsweise einen geringeren Durchmesser als das umschlossene Luftvolumen und stellt somit eine relativ enge beziehungsweise schmale Verbindung zwischen diesem und einer Umgebung des Dämpfungselementes, insbesondere mit der in dem Luftführungselement außerhalb des Dämpfungselements geführten Luft, her. Die Öffnung kann bevorzugt eine zylindrische Form aufweisen mit einer entlang der Zylinderachse gemessenen Länge, welche bevorzugt geringer sein kann als eine in derselben Richtung gemessene Ausdehnung der Kammer. Insgesamt entsteht so ein Masse-Feder-System, bei dem die Luft im Bereich der Öffnung als schwingende Masse und das in der Kammer eingeschlossene Luftvolumen als Feder dienen. Somit wird Schallenergie in mechanische Energie beziehungsweise eine kollektive Schwingung der Masse umgesetzt und gegebenenfalls über Reibungseffekte in als Wärme dissipiert. Der Einsatz eines Helmholtzresonators ist hier besonders vorteilhaft, da durch eine entsprechende Auslegung und Anpassung der Geometrie eine Abstimmung des Frequenz- beziehungsweise Resonanz- oder Absorptionsverhaltens an jeweils vorliegende Gegebenheiten des Kraftfahrzeugs möglich ist. So kann ein in einem Kraftfahrzeug im Bereich der Belüftungseinrichtung beziehungsweise des jeweiligen Luftauslasses auftretendes Schall- beziehungsweise Frequenzspektrum und eine zugehörige Intensitätsverteilung des Schalls deutlich von der jeweiligen gegebenenfalls sehr komplexen Geometrie des Luftführungselements und einer Vielzahl weiterer gegebenenfalls nicht oder nur schwer beeinflussbarer Faktoren abhängig sein und beeinflusst werden. Aufgrund des Funktionsprinzips und der möglichen gezielten Abstimmbarkeit kann mittels des Helmholtzresonators vorteilhaft auch in den mittleren und tiefen Frequenzbereichen eine effektive Reduktion der auftretenden Schalldrücke beziehungsweise Schalldruckpegel erreicht werden, was mit herkömmlichen porösen Schallabsorbern in der Praxis nicht oder nicht in signifikantem beziehungsweise ausreichendem Umfang möglich ist. Weiterhin besonders vorteilhaft ist es dabei, dass der Helmholtzresonator einen bei vergleichbarer Effektivität um ein Mehrfaches geringeren Bauraum benötigt und bei Ausnutzung des zur Verfügung stehenden begrenzten Bauraums eine deutlich höhere Effektivität aufweist. Zudem kann der Helmholtzresonator aus einem sehr einfach zu handhabenden, robusten und kostengünstigen Material beziehungsweise Werkstoff, wie etwa einem Kunststoff, gefertigt werden. Ein weiterer Vorteil ist, dass das genutzte Wirkprinzip auf geometrischen Eigenschaften oder Formeigenschaften des Dämpfungselements beruht oder basiert und somit nachteilige Effekte wie etwa eine Materialalterung oder ein Materialverbrauch verhindert oder zumindest minimiert werden.

Für ein besonders flexibles und genaues Einstellen eines spektralen Dämpfungsverhaltens des Dämpfungselements ist es erfindungsgemäß vorgesehen, dass das Dämpfungselement wenigstens zwei Kammern aufweist, wobei jeweils eine Kammer mehrere Öffnungen von einheitlicher Größe aufweist und wobei eine der Kammern Öffnungen aufweist, welche eine andere Größe haben als die Öffnungen der wenigstens einer weiteren Kammer.

Im Sinne der vorliegenden Erfindung gelten akustische Frequenzen zwischen Null und einigen hundert Hertz als tiefe oder niedrige Frequenzen. Frequenzen von einigen Kilohertz und mehr gelten als hochfrequent. Der zwischen tiefen und hohen Frequenzen liegende Bereich umfasst mittlere Frequenzen. Die Übergänge zwischen diesen Bereichen sind dabei fließend und entsprechend ist auch eine Effektivität sowohl herkömmlicher schallabsorbierender poröser Materialien als auch des erfindungsgemäßen Dämpfungselements nicht scharf auf bestimmte Frequenzen begrenzt.

In weiterer Ausgestaltung der Erfindung ist es vorgesehen, dass das Dämpfungselement durch eine Mehrzahl miteinander gekoppelter Helmholtzresonatoren gebildet ist. Mit anderen Worten kann das akustische Dämpfungselement weiterhin einteilig ausgebildet sein, dabei jedoch mehrere Kammern mit jeweiligen Öffnungen aufweisen. Die Hohlräume oder Innenräume jeweils zwei aneinander angrenzender Kammern sind dabei jedoch nicht direkt miteinander verbunden, das heißt sie sind - zumindest entlang der jeweiligen Verbindungs- oder Grenzfläche oder -flächen gegeneinander dicht oder abgeschlossen. Die jeweiligen Öffnungen stellen jeweils eine direkte Verbindung zwischen dem jeweiligen Hohl- oder Innenraum der Kammer beziehungsweise dem von der Kammer umschlossenen Luftvolumen und einem Innenraum, Innenbereich oder Strömungsbereich des Luftführungselements beziehungsweise der in dem Luftführungselement geführten Luft her oder dar. Die Öffnungen sind also in Strömungsrichtung angeordnet. Über diese Öffnungen sind die Kammern unter Vermittlung der in dem Luftführungselement geführten Luft oder des in dem Luftführungselement befindlichen Luftvolumens miteinander gekoppelt. Es sind somit also auch die in den Kammern eingeschlossenen Luftvolumina miteinander gekoppelt.

Durch die Kopplung mehrerer Kammern, welche insbesondere auch von unterschiedlicher Form und Größe sein können, besitzt das Dämpfungselement nunmehr auch eine Mehrzahl unterschiedlicher Resonanzfrequenzen und eine insgesamt gegenüber einem einfachen Helmholtzresonator besonders vorteilhaft breitbandigere schalldämpfende Wirkung. Die Öffnungen der Kammern können vorteilhaft so aufeinander abgestimmt oder aneinander angepasst werden, dass sich ein die Wirkung verbessernder Gesamteffekt oder ein entsprechendes Zusammenwirken der Kammern ergibt. Die Kammern können sich also gegenseitig positiv beeinflussen, das heißt durch das Zusammenwirken oder eine Wechselwirkung zwischen den Kammern kann eine, insbesondere gegenüber einem einzelnen Helmholzresonator, verbesserte Dämpfungswirkung und Akustik erzielt werden.

In weiterer Ausgestaltung der Erfindung ist es vorgesehen, dass das Dämpfungselement eine Mehrzahl von, insbesondere runden, Öffnungen aufweist. Durch eine entsprechend geschickte Wahl der Größen und der Anordnung der Öffnungen kann eine Anpassung beziehungsweise Abstimmung der akustischen Eigenschaften, das heißt des Frequenz- oder Dämpfungsverhaltens des Dämpfungselements erreicht beziehungsweise vorgenommen werden. Insbesondere können jeweils mehrere Öffnungen im Bereich einer jeden Kammer beziehungsweise im Bereich eines jeden Resonanzvolumens des Dämpfungselements vorgesehen sein. Dies ermöglicht vorteilhaft eine möglichst flexible Gestaltung, um eine optimale Wirkung zu erzielen. Die Öffnungen können dabei aber auch andere Formen aufweisen und beispielsweise eine schlitzartige Gestalt haben. Es ist auch denkbar und möglich, mehrere unterschiedliche Formen zu kombinieren beziehungsweise mehrere Öffnungen mit unterschiedlichen Formen vorzusehen. Die Öffnungen und deren Form oder Formen können dabei so gestaltet und/oder aufeinander abgestimmt oder aneinander angepasst sein oder werden, dass neben der schalldämpfenden Wirkung kein zusätzlicher, unerwünschter Schall - beispielsweise Pfeifgeräusche - beim Überströmen der Öffnungen durch die in dem Luftführungselement geführte Luft entsteht.

Gemäß der Erfindung weist das Dämpfungselement eine Mehrzahl von Öffnungen gleicher Größe auf, wobei vorgesehen ist, dass jeweils eine Kammer des Dämpfungselements Öffnungen von zumindest im Wesentlichen einheitlicher Größe aufweist. Insgesamt können wenigstens zwei, insbesondere drei, Kammern vorgesehen sind, wobei wenigstens eine Kammer Öffnungen aufweist, welche eine andere Größe haben als die Öffnungen wenigstens einer weiteren Kammer. Auch hierdurch lässt sich vorteilhaft das spektrale Dämpfungsverhalten des Dämpfungselements besonders flexibel und genau einstellen.

Selbstverständlich können sowohl bei einer als auch bei mehreren Kammern die jeweilige Offnung oder die jeweiligen Öffnungen hinsichtlich der jeweiligen Form flexibel gestaltet und angepasst werden, um eine optimale Wirkung zu erzielen.

Bei mehreren Öffnungen in oder an einer einzelnen Kammer ergibt sich effektiv eine Kopplung über ein gemeinsames Federelement, wobei die Öffnungen oder Bohrungen oder Durchbrüche oder Durchlässe beziehungsweise ein jeweiliges darin befindliches Luftvolumen als mechanische Masse wirkt. Mehrere Kammern können für sich als Einzel-Helmholzelemente wirken, dabei jedoch wie beschrieben untereinander, aneinander oder miteinander gekoppelt sein.

In weiterer Ausgestaltung der Erfindung ist es vorgesehen, dass mittels des Dämpfungselements an unterschiedlichen zur Belüftung des Innenraums vorgesehenen Luftauslässen der Belüftungseinrichtung auftretende Schalldruckpegel aneinander angeglichen sind. Mit anderen Worten weist das Luftführungselement eine Mehrzahl, insbesondere zwei, voneinander beabstandete und unmittelbar an einem Begrenzungselement beziehungsweise in einem Randbereich des Innenraums angeordnete Luftauslässe auf und das Dämpfungselement ist derart gestaltet und ausgelegt, dass durch seine schalldämpfende Wirkung die an den Luftauslässen auftretenden beziehungsweise die aus den Luftauslässen austretenden Geräusche in ihrer Lautstärke und ihrem Spektrum beziehungsweise ihrer spektralen Intensitätsverteilung einander möglichst ähnlich sind. Damit werden also die entsprechenden, von einem jeweiligen Fahrzeuginsassen wahrgenommenen Geräusche bezüglich der verschiedenen Luftauslässe symmetrisiert, sodass für den Fahrzeuginsassen ein möglichst gleichmäßiger und angenehmer Höreindruck entsteht. Dies kann vorteilhaft zu einem erhöhten beziehungsweise verbesserten Qualitätseindruck sowie einer verringerten Ablenkungsgefahr beziehungsweise zu verminderten Irritations- und/oder Ermüdungserscheinungen führen und somit letztlich zu einer erhöhten Fahrsicherheit beitragen. Je nach Anordnung der unterschiedlichen Luftauslässe kann das Dämpfungselement dazu ausgelegt sein, in einem räumlich mittig zwischen den Luftauslässen zentrierten Bereich und/oder an einem typischerweise von einem jeweiligen Fahrzeuginsassen eingenommenen Bereich möglichst symmetrische Schallpegel und akustische Frequenzspektren zu erzeugen.

In weiterer Ausbildung der Erfindung ist es vorgesehen, dass das Luftführungselement zwei sich von einem Lufteinlass beziehungsweise einem Lufteinlassbereich des Luftführungselements bis zu einem jeweiligen zur Belüftung des Innenraums vorgesehenen Luftauslass erstreckende Luftführungskanäle unterschiedlicher Länge aufweist und das Dämpfungselement in dem kürzeren Luftführungskanal angeordnet ist. Das Luftführungselement kann also einen einzigen gemeinsamen Lufteinlass oder Lufteinlassbereich aufweisen, an welchen sich eine Mehrzahl von Luftführungskanälen anschließt, über welche schließlich die jeweiligen Luftauslässe mit Luft versorgt werden. Der Lufteinlass oder Lufteinlassbereich kann auch Trennungselemente aufweisen, welche eine jeweilige Wandung oder Begrenzung eines Luftführungskanals beziehungsweise der Luftführungskanäle bilden, sodass nicht notwendigerweise eine direkte Verbindung mehrerer Luftführungskanäle untereinander gegeben ist. Die Anordnung des Dämpfungselements in dem kürzeren Luftführungskanal ist besonders vorteilhaft, da an dem kürzeren Luftführungskanal zugeordneten Luftauslass auftretende Schallpegel typischerweise höher sind als an anderen, einem längeren Luftführungskanal zugeordneten Luftauslässen. Somit kann durch diese Anordnung besonders effektiv eine Schalldämmung und Symmetrisierung realisiert werden.

In weiterer Ausbildung der Erfindung ist es vorgesehen, dass in dem Luftführungselement zusätzlich zu dem Dämpfungselement ein schallabsorbierendes Material, insbesondere ein Schaum oder ein Vlies, angeordnet ist. Das zusätzliche schallabsorbierende Material beruht in seiner Wirkung also auf einem anderen Prinzip als das Dämpfungselement, wobei neben Schäumen und Vliesen auch eine Vielzahl anderer, insbesondere poröser Materialien verwendbar beziehungsweise einsetzbar ist.

Durch das schallabsorbierende poröse Material können beispielsweise relativ hohe Frequenzen besonders wirksam gedämpft werden, während mittlere und tiefe Frequenzen durch das Dämpfungselement besonders effektiv gedämpft werden können. Es kann also aufgrund der unterschiedlichen Wirkungsweisen und Eigenschaften des zusätzlichen schallabsorbierenden Materials und des Dämpfungselements besonders vorteilhaft eine noch flexiblere und bessere Abstimmung der schalldämpfenden Gesamtwirkung der Belüftungseinrichtung erzielt werden. So können beispielsweise je nach Geometrie, zur Verfügung stehendem Bauraum und typischer Geräuschkulisse beide schalldämpfenden Maßnahmen in ihrer Anordnung, Ausdehnung und Gestaltung und damit letztlich in ihrer Wirkung aufeinander abgestimmt werden.

In weiterer Ausbildung der Erfindung ist es vorgesehen, dass das Dämpfungselement zumindest zu einem Großteil aus einem ungeschäumten Kunststoff gebildet ist. Dies ermöglicht besonders vorteilhaft eine möglichst kostengünstige Fertigung sowie eine besonders einfache Handhabbarkeit des Dämpfungselements. Weiterhin kann ein derart gefertigtes Dämpfungselement besonders einfach und mit geringem Aufwand sicher an beziehungsweise in dem Luftführungselement angeordnet beziehungsweise gehalten oder befestigt werden. Hierfür können vielfältige verschiedene Befestigungsmittel beziehungsweise -arten, wie etwa Schraub-, Niet-, Steck- und/oder Klebeverbindungen geeignet sein.

In weiterer Ausgestaltung der Erfindung ist es vorgesehen, dass sich das Dämpfungselement zumindest im Wesentlichen vollständig über einen Querschnitt des Luftführungselements erstreckt. Insbesondere kann die Form des Dämpfungselements einem Querschnitt eines Luftführungskanals, in dem das Dämpfungselement angeordnet ist, entsprechen. Um dennoch einen ausreichenden Luftdurchsatz durch den entsprechenden Luftführungskanal zu gewährleisten, kann das Dämpfungselement an seinen gegenüberliegenden, sich in der entsprechenden Querschnittsebene des Luftführungskanals erstreckenden Seiten jeweilige Öffnungen aufweisen. Eine solche Anordnung stellt vorteilhaft gleichzeitig sicher, dass sich Schallwellen nicht ungehindert entlang des Luftführungskanals und beispielsweise an dem Dämpfungselement vorbei bis in den Innenraum des Kraftfahrzeugs ausbreiten können. Eine derartige Anordnung kann besonders vorteilhaft sein, wenn der Querschnitt des Luftführungselements relativ groß ist, da das Dämpfungselement dem akustischen Medium, das heißt der Luft, nur bis zu einer begrenzten Tiefe Energie entziehen kann.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: in schematischer und perspektivischer Darstellung eine Belüftungseinrichtung zur Belüftung eines Innenraums eines Kraftfahrzeugs, welche als Teil eines Luftführungselements zwei unterschiedlich lange Luftführungskanäle sowie ein in dem Luftführungselement angeordnetes akustisches Dämpfungselement aufweist; und
- Fig. 2: eine schematische Perspektivansicht eines durch drei gekoppelte Helmholtzresonatoren gebildeten akustischen Dämpfungselements.

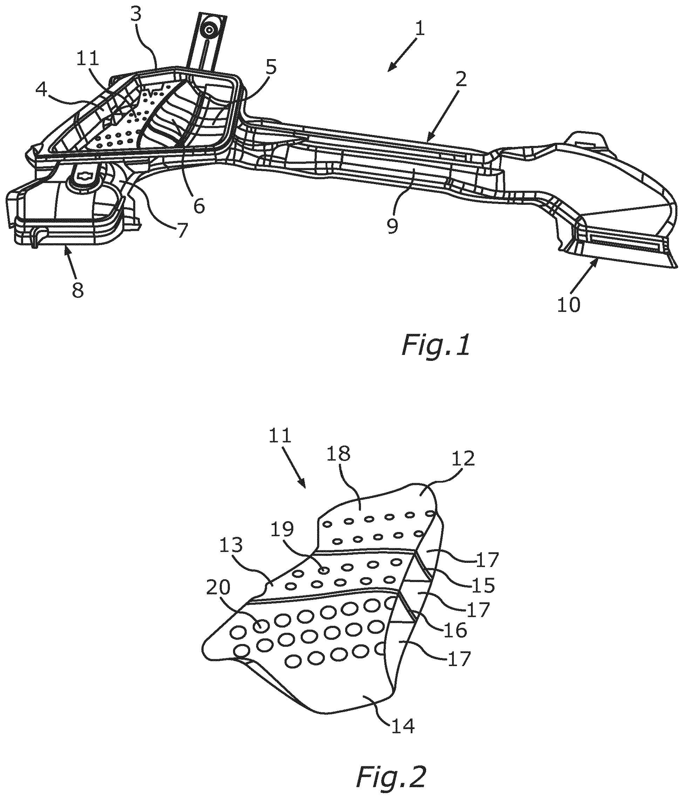

Fig. 1 zeigt in einer schematischen Perspektivansicht eine Belüftungseinrichtung 1 zur Belüftung eines Innenraums eines Kraftfahrzeugs, welche zu einem Großteil durch ein Luftführungselement 2 gebildet ist. Letzteres weist einen Lufteinlassbereich 3 mit einem ersten Lufteinlass 4 und einem zweiten Lufteinlass 5, welche durch ein Trennelement 6 voneinander getrennt sind, auf. Das Luftführungselement 2 umfasst weiterhin einen kurzen Luftführungskanal 7, welcher den ersten Lufteinlass 4 mit einem ersten Luftauslass 8 verbindet, und einen langen Luftführungskanal 9, welcher den zweiten Lufteinlass 5 mit einem zweiten Luftauslass 10 verbindet. In dem ersten Lufteinlass 4 beziehungsweise in einem Übergangsbereich zwischen dem ersten Lufteinlass 4 und dem kurzen Luftführungskanal 7 ist als Teil der Belüftungseinrichtung 1 ein Dämpfungselement 11 angeordnet. Das Dämpfungselement 11 erstreckt sich dabei zumindest im Wesentlichen über den gesamten Querschnitt des ersten Lufteinlasses 4 beziehungsweise des kurzen Luftführungskanals 7und besitzt eine dementsprechend komplexe beziehungsweise unregelmäßig geformte äußere Kontur.

Auch bekannte herkömmliche und vielfach eingesetzte Belüftungseinrichtungen weisen Luftführungs- beziehungsweise Klimakanäle und insbesondere oftmals sehr kurze Mittenkanäle - hier entsprechend dem kurzen Luftführungskanal 7 - und deutlich längere Seitenkanäle - hier entsprechend dem langen Luftführungskanal 9 - auf. Diese unterschiedlich langen Kanäle zeigen dabei ein deutlich unterschiedliches akustisches Übertragungsverhalten, sodass durch die unterschiedlichen Kanäle übertragene beziehungsweise sich entlang dieser Kanäle ausbreitende und aus jeweiligen Luftauslässen austretende Geräusche stark unterschiedlich beziehungsweise asymmetrisch sind. Um eine Lautstärke, das heißt einen Schalldruck beziehungsweise einen Schalldruckpegel, zu reduzieren, können in den Kanälen schallabsorbierende poröse Materialien vorgesehen sein, welche jedoch nur in einem begrenzten, insbesondere relativ hohen Frequenzbereich eine nennenswerte Wirkung zeigen.

Um auch in mittleren und tieferen Frequenzbereichen eine Schalldämpfung und einen Ausgleich beziehungsweise eine weitestmögliche Minderung der akustischen Unterschiede zwischen dem ersten Luftauslass 8 und dem zweiten Luftauslass 10 zu erreichen, ist es deshalb vorliegend vorgesehen, dass das Dämpfungselement 11 als Helmholtzresonator ausgebildet und im Bereich des kurzen Luftführungskanals 7 angeordnet ist. Typischerweise kann ein Schalldruckpegel von beispielsweise durch Turbulenzen entstehenden Geräuschen im Bereich des zweiten Luftauslasses 10 um beispielsweise 10 bis 15 Dezibel geringer sein als im Bereich des ersten Luftauslasses 8, wenn kein entsprechend ausgelegtes Dämpfungselement 11 vorgesehen ist. Der kurze Luftführungskanal 7 beziehungsweise der erste Luftauslass 8 ist also in einer akustischen Wahrnehmung eines Fahrzeuginsassen dominant, wobei die Unterschiede insbesondere in mittleren Frequenzbereichen zwischen beispielsweise 800 und 3000 Hertz vorliegen können. Gerade in diesem Frequenzbereich kann durch einen Helmholtzresonator eine deutlich bessere geräuschmindernde Wirkung erzielt werden als mittels herkömmlicher schallabsorbierender Materialien.

Anders als vorliegend dargestellt, kann das Dämpfungselement 11 auch an anderer Stelle zwischen dem Lufteinlassbereich 3 und dem ersten Luftauslass 8 angeordnet werden, wobei dann gegebenenfalls eine entsprechend angepasste Formgebung und Auslegung notwendig sein kann. Bevorzugt ist - hier nicht erkennbar - in einem oder beiden der Luftführungskanäle 7, 9 zusätzlich schallabsorbierendes poröses Material wie etwa ein Schaumstoff oder ein Vlies angeordnet, wobei die Wirkungen dieses Materials und des Dämpfungselements 11 aufeinander abgestimmt sind, um eine Schalldruckpegelreduktion über einen möglichst breiten Frequenzbereich und einen insgesamt möglichst harmonischen akustischen Eindruck für den oder die jeweiligen Fahrzeuginsassen zu erzielen.

Je nach Anordnung des Luftführungselements 2 in dem jeweiligen Kraftfahrzeug können der erste Luftauslass 8 und der zweite Luftauslass 10 beispielsweise in einer Instrumententafel des Kraftfahrzeugs und beispielsweise beidseitig eines Lenkrades oder an gegenüberliegenden seitlichen Endbereiches der Instrumententafel angeordnet sein. Prinzipiell kann das Luftführungselement 2 auch mehr als zwei Luftführungskanäle aufweisen, welche gegebenenfalls auch zwischen dem Lufteinlassbereich 3 und jeweiligen Luftauslässen eine oder mehrere Verzweigungen zu jeweiligen weiteren Luftauslässen aufweisen können. Ebenso können auch mehrere als Helmholtzresonatoren ausgebildete Dämpfungselemente 11 in einem, mehreren oder allen Luftführungskanälen vorgesehen sein. Sind mehrere Dämpfungselemente 11 vorgesehen, so sind diese vorteilhaft unterschiedlich zu gestalten beziehungsweise auszulegen und also in ihrem Dämpfungsverhalten abzustimmen, um eine möglichst harmonische und symmetrische Geräuschkulisse mit einem möglichst geringen Schalldruckpegel zu realisieren. So kann beispielsweise eine jeweilige Dämpfungseffektivität in Abhängigkeit von der Länge des jeweiligen Luftführungskanals, in dem das jeweilige Dämpfungselement 11 angeordnet ist, eingestellt werden, sodass in längeren Luftführungskanälen angeordnete Dämpfungselemente 11 eine geringere Reduktion des jeweiligen lokalen Schalldruckpegels bewirken.

Fig. 2 zeigt in einer schematischen Perspektivansicht das Dämpfungselement 11 aus Fig. 1. Vorliegend weist das Dämpfungselement 11 einen Drei-Kammer-Aufbau mit dementsprechend drei gekoppelten Helmholtzresonatoren auf. Dazu umfasst das Dämpfungselement 11 ein erstes Segment 12, ein zweites Segment 13 und ein drittes Segment 14, wobei das erste Segment 12 von dem zweiten Segment 13 durch eine erste Trennwand 15 und das zweite Segment 13 von dem dritten Segment 14 durch eine zweite Trennwand 16 getrennt sind. Die erste Trennwand 15 und die zweite Trennwand 16 bilden dabei zusammen mit entsprechenden Abschnitten der äußeren Wände des Dämpfungselements 11 jeweilige Begrenzungen jeweiliger Kammern beziehungsweise Innenbereiche 17 der einzelnen Segmente 12, 13, 14. Um die Kopplung der Segmente 12, 13, 14 beziehungsweise der jeweiligen Innenbereiche 17 zu erreichen, weisen die erste Trennwand 15 und die zweite Trennwand 16 jeweilige Durchgangsöffnungen beziehungsweise Durchbrüche auf. Um das Funktionsprinzip eines Helmholtzresonators zu realisieren, sind an den einzelnen Segmenten 12, 13, 14 jeweils eine Mehrzahl von Öffnungen 18, 19, 20 vorgesehen. Diese Öffnungen 18, 19, 20 verbinden die jeweiligen Innenbereiche 17 der Segmente 12, 13, 14 mit einem Umgebungsbereich des Dämpfungselements 11 und damit vorliegend mit einem von dem kurzen Luftführungskanal 7 beziehungsweise dem Lufteinlassbereich 3 zumindest teilweise eingefassten Volumen. Eine genaue Lage, Anzahl und Größe der Öffnungen 18, 19, 20 kann ebenso wie die jeweilige Größe und Gestalt der Innenbereiche 17 und gegebenenfalls auch der Kopplungsöffnungen in den Trennwänden 15, 16 für eine genaue und bedarfsgerechte Abstimmung des akustischen Verhaltens des Dämpfungselements 11 genutzt werden. Vorliegend weisen das erste Segment 12 und das zweite Segment 13 ein zumindest ungefähr regelmäßiges und aus zwei Reihen gebildetes Muster von Öffnungen 18, 19 auf, wobei die Öffnungen 18 des ersten Segments 12 und die Öffnungen 19 des zweiten Segments 13 sämtlich eine einheitliche Größe aufweisen. Hierfür kann beispielsweise ein Durchmesser der Öffnungen 18, 19 von 3 Millimetern vorgesehen sein. Das dritte Segment 14 weist vorliegend davon abweichend ein ebenfalls zumindest ungefähr regelmäßiges, jedoch aus drei Reihen gebildetes Muster von Öffnungen 20 auf. Die Öffnungen 20 des dritten Segments 14 sind vorliegend untereinander von gleicher, einheitlicher Größe, besitzen jedoch einen größeren Durchmesser als die Öffnungen 18, 19 der Segmente 12, 13. Vorliegend kann für die Öffnungen 20 des dritten Segments 14 beispielsweise ein jeweiliger Durchmesser von 15 Millimetern vorgesehen sein.

Je nach entsprechenden Anforderungen und Gegebenheiten und einer Geometrie des Luftführungselements 2 kann das Dämpfungselement 11 auch mit einer abweichenden Anzahl und/oder Größe und/oder Gestalt der Segmente 12, 13, 14, der entsprechenden Trennwände 15, 16 und der Öffnungen 18, 19, 20 ausgebildet werden.

Um das Dämpfungselement 11 in seiner vorliegend dargestellten komplexen Gestalt möglichst kostengünstig herstellen zu können, ist es bevorzugt aus einem, insbesondere ungeschäumten, Kunststoff gefertigt. Prinzipiell wäre jedoch auch eine Ausführung in anderen Werkstoffen, wie etwa einem Metall denkbar. Wichtig ist dabei, dass eine ausreichende Steifigkeit gewährleistet ist, um zu verhindern, dass beispielsweise durch eine Fluid-Struktur-Interaktion im Bereich des Resonators, das heißt des Dämpfungselements 11, die schalldämpfende Wirkung beeinträchtigt wird. Entsprechendes gilt auch für das Luftführungselement 2, wobei durchaus auch eine Kombination unterschiedlicher Materialien und Werkstoffe denkbar ist, um beispielsweise möglichst geringe Kosten, ein möglichst geringes Gewicht und dabei gleichzeitig eine ausreichende Stabilität zu erreichen.

Das Dämpfungselement 11 kann in dem Luftführungselement 2 auch in einer anderen als der hier dargestellten Einbaulage angeordnet werden und muss sich auch nicht notwendigerweise über den gesamten lokalen Querschnitt des kurzen Luftführungskanals 7 erstrecken. Beispielsweise kann es auch denkbar sein, das Dämpfungselement 11 an einem Wandbereich des kurzen Luftführungskanals 7 anzuordnen und dabei einen Teil des Querschnitts des kurzen Luftführungskanals 7 freizulassen, um einen ausreichenden Luftdurchsatz zu ermöglichen.

### Bezugszeichenliste

- 1: Belüftungseinrichtung
- 2: Luftführungselement
- 3: Lufteinlassbereich
- 4: erster Lufteinlass
- 5: zweiter Lufteinlass
- 6: Trennelement
- 7: kurzer Luftführungskanal
- 8: erster Luftauslass
- 9: langer Luftführungskanal
- 10: zweiter Luftauslass
- 11: Dämpfungselement
- 12: erstes Segment
- 13: zweites Segment
- 14: drittes Segment
- 15: erste Trennwand
- 16: zweite Trennwand
- 17: Innenbereiche
- 18, 19, 20: Öffnungen

## Patentansprüche

1. Belüftungseinrichtung (1) zur Belüftung eines Innenraums eines Kraftfahrzeugs, mit einem Luftführungselement (2), welches zumindest einen Luftauslass (8, 10) zur Belüftung des Innenraums aufweist, und mit einem in dem Luftführungselement (2) angeordneten, als Helmholtzresonator ausgebildeten, akustischen Dämpfungselement (11), mittels welchem ein an dem Luftauslass (8, 10) auftretender Schalldruckpegel reduzierbar ist,
**dadurch gekennzeichnet, dass**
das Dämpfungselement (11) wenigstens zwei Kammern aufweist, wobei jeweils eine Kammer mehrere Öffnungen von einheitlicher Größe aufweist und wobei eine der Kammern Öffnungen aufweist, welche eine andere Größe haben als die Öffnungen der wenigstens einen weiteren Kammer.

2. Belüftungseinrichtung (1) nach Anspruch 1,
**dadurch gekennzeichnet, dass**
das Dämpfungselement (11) durch eine Mehrzahl miteinander gekoppelter Helmholtzresonatoren (12, 13, 14) gebildet ist.

3. Belüftungseinrichtung (1) nach einem der vorhergehenden Ansprüche,
**dadurch gekennzeichnet, dass**
das Dämpfungselement (11) eine Mehrzahl von runden Öffnungen (18, 19, 20) aufweist.

4. Belüftungseinrichtung (1) nach einem der vorhergehenden Ansprüche,
**dadurch gekennzeichnet, dass**
mittels des Dämpfungselements (11) an unterschiedlichen zur Belüftung des Innenraums vorgesehenen Luftauslässen (8, 10) der Belüftungseinrichtung (1) auftretende Schalldruckpegel aneinander angeglichen sind.

5. Belüftungseinrichtung (1) nach einem der vorhergehenden Ansprüche,
**dadurch gekennzeichnet, dass**
das Luftführungselement (2) zwei sich von einem Lufteinlass (3, 4, 5) bis zu einem jeweiligen zur Belüftung des Innenraums vorgesehenen Luftauslass (8, 10) erstreckende Luftführungskanäle (7, 9) unterschiedlicher Länge aufweist und das Dämpfungselement (11) in dem kürzeren Luftführungskanal (7) angeordnet ist.

6. Belüftungseinrichtung (1) nach einem der vorhergehenden Ansprüche,
**dadurch gekennzeichnet, dass**
in dem Luftführungselement (2) zusätzlich zu dem Dämpfungselement (11) ein schallabsorbierendes Material, insbesondere ein Schaum oder ein Vlies, angeordnet ist.

7. Belüftungseinrichtung (1) nach einem der vorhergehenden Ansprüche,
**dadurch gekennzeichnet, dass**
das Dämpfungselement (11) zumindest zu einem Großteil aus einem ungeschäumten Kunststoff gebildet ist.

8. Belüftungseinrichtung (1) nach einem der vorhergehenden Ansprüche,
**dadurch gekennzeichnet, dass**
sich das Dämpfungselement (11) zumindest im Wesentlichen vollständig über einen Querschnitt des Luftführungselements (2) erstreckt.

## Claims

1. Ventilation device (1) for ventilating an interior of a motor vehicle, comprising an air guide element (2), which comprises at least one air outlet (8, 10) for ventilating the interior, and comprising an acoustic attenuation element (11) formed as a Helmholtz resonator, arranged in the air guide element (2), by means of which a sound pressure level occurring at the air outlet (8, 10) can be reduced,
**characterized in that**
the attenuation element (11) comprises at least two chambers, wherein each one chamber comprises multiple openings of uniform size and wherein one of the chambers comprises openings, which have a size different from the openings of the at least one further chamber.

2. The ventilation device (1) according to claim 1,
**characterized in that**
the attenuation element (11) is formed by a plurality of Helmholtz resonators (12, 13, 14) coupled to each other.

3. The ventilation device (1) according to any one of the preceding claims, **characterized in that**
the attenuation element (11) comprises a plurality of round openings (18, 19, 20).

4. The ventilation device (1) according to any one of the preceding claims, **characterized in that**
sound pressure levels occurring at different air outlets (8, 10) of the ventilation device (1) provided for ventilation of the interior are adapted to each other by means of the attenuation element (11).

5. The ventilation device (1) according to any one of the preceding claims, **characterized in that**
the air guide element (2) comprises two air guide channels (7, 9) of different length extending from an air inlet (3, 4, 5) up to a respective air outlet (8, 10) provided for ventilation of the interior, and the attenuation element (11) is arranged in the shorter air guide channel (7).

6. The ventilation device (1) according to any one of the preceding claims, **characterized in that**
a sound absorbing material, in particular a foam or fleece, is arranged in the air guide element (2) in addition to the attenuation element (11).

7. The ventilation device (1) according to any one of the preceding claims, **characterized in that**
the attenuation element (11) is formed of an unfoamed plastic at least for the most part.

8. The ventilation device (1) according to any one of the preceding claims, **characterized in that**
the attenuation element (11) at least substantially completely extends across a cross-section of the air guide element (2).

## Revendications

1. Dispositif de ventilation (1) servant à ventiler l'habitacle d'un véhicule automobile, comportant un élément de guidage de l'air (2), qui présente au moins une sortie d'air (8, 10) pour la ventilation de l'habitacle, et un élément d'amortissement acoustique (11), agencé dans l'élément de guidage de l'air (2), réalisé sous la forme d'un résonateur de Helmholtz, par l'intermédiaire duquel un niveau de pression acoustique, se produisant au niveau de la sortie d'air (8, 10), peut être réduit,
**caractérisé en ce que**
l'élément d'amortissement (11) comporte au moins deux chambres, dans lequel une chambre chacune présente plusieurs ouvertures de taille uniforme, et dans lequel l'une des chambres comporte des ouvertures, ayant une taille différente de celle des ouvertures de ladite au moins une autre chambre.

2. Dispositif de ventilation (1) selon la revendication 1,
**caractérisé en ce que**
l'élément d'amortissement (11) est formé par une pluralité de résonateurs de Helmholtz (12, 13, 14) couplés entre eux.

3. Dispositif de ventilation (1) selon l'une quelconque des revendications précédentes,
**caractérisé en ce que**
l'élément d'amortissement (11) comporte une pluralité d'ouvertures rondes (18, 19, 20).

4. Dispositif de ventilation (1) selon l'une quelconque des revendications précédentes,
**caractérisé en ce que**
au moyen de l'élément d'amortissement (11), des niveaux de pression acoustique apparaissant à différentes sorties d'air (8, 10) du dispositif de ventilation (1), prévues pour la ventilation de l'habitacle, sont harmonisés entre eux.

5. Dispositif de ventilation (1) selon l'une quelconque des revendications précédentes,
**caractérisé en ce que**
l'élément de guidage de l'air (2) présente deux canaux de guidage de l'air (7, 9) de longueurs différentes, s'étendant d'une entrée d'air (3, 4, 5) jusqu'à une sortie d'air (8, 10) respective, prévue pour la ventilation de l'habitacle, et l'élément d'amortissement (11) est disposé dans le canal de guidage de l'air (7) plus court.

6. Dispositif de ventilation (1) selon l'une quelconque des revendications précédentes,
**caractérisé en ce que**
un matériau absorbant le son, surtout une mousse ou un non-tissé, est disposé dans l'élément de guidage de l'air (2) en plus de l'élément d'amortissement (11).

7. Dispositif de ventilation (1) selon l'une quelconque des revendications précédentes,
**caractérisé en ce que**
l'élément d'amortissement (11) est formé au moins en grande partie d'une matière plastique non expansée.

8. Dispositif de ventilation (1) selon l'une quelconque des revendications précédentes,
**caractérisé en ce que**
l'élément d'amortissement (11) s'étend au moins sensiblement complètement sur une section transversale de l'élément de guidage de l'air (2).
